# FASCICULE DE BREVET EUROPEEN

(11) **EP 4 156 437 B1**
(45) Date de publication et mention de la délivrance du brevet: **18.09.2024**
(21) Numéro de dépôt: 22197840.6
(22) Date de dépôt: 26.09.2022
(51) Int. Cl.: H02J 3/06

(54) **SYSTÈME DE DISTRIBUTION D'ÉLECTRICITÉ POUR UNE INSTALLATION DOMESTIQUE COMPRENANT PLUSIEURS SOURCES ÉLECTRIQUES**
STROMVERTEILUNGSSYSTEM FÜR EINE HAUSANLAGE MIT MEHREREN ELEKTRISCHEN QUELLEN
POWER DISTRIBUTION SYSTEM FOR A DOMESTIC INSTALLATION COMPRISING SEVERAL ELECTRICAL SOURCES

(30) Priorité: 24.09.2021 FR 2110100; 14.01.2022 EP 22305033; 29.07.2022 EP 22306155
(43) Date de publication de la demande: 29.03.2023
(73) Titulaire: Schneider Electric Industries SAS, 92500 Rueil-Malmaison (FR)
(72) Inventeur: LEBEAU, Bernard, 38190 LES ADRETS (FR); DU PORT DE PONCHARRA, Etienne, 38570 CRETS EN BELLEDONNE (FR); BUR, Emmanuel, 38500 LA BUISSE (FR)
(74) Mandataire: Lavoix

(56) Documents cités:
- WO-A1-2016/176727
- WO-A1-2018/234330
- FR-A1- 2 432 789
- US-A1- 2021 083 506

## Description

L'invention concerne un système de distribution d'électricité pour une installation domestique.

De nos jours, il est courant que des installations domestiques de distribution d'électricité soient alimentées par plusieurs sources électriques, par exemple par un réseau public de distribution d'électricité et par une source d'alimentation locale, tel qu'un ou plusieurs générateurs photovoltaïques (PV).

Le terme installation domestique s'applique pour le cas des installations de distribution d'électricité résidentielles, mais également pour le cas des installations de distribution d'électricité de consommation électrique comparable, e.g. bâtiment de bureaux ou commercial.

Souvent, les sources d'alimentation locales sont branchées sur des installations de distribution existantes. C'est par exemple le cas lorsque des générateurs photovoltaïques sont posés sur une habitation déjà pourvue d'une installation de distribution d'électricité à partir d'un réseau de distribution d'électricité (« grid » en anglais).

Pour des raisons de coût et de facilité d'installation, il est fréquent que ces sources d'alimentation locales soient branchées en aval de l'arrivée du réseau de distribution électrique (grid) aux des côtés des tableaux de distribution de l'électricité vers les charges.

Dans de telles installations de distribution, la source d'alimentation principale, i.e. le réseau de distribution d'électricité, est associée à un disjoncteur principal, branché de manière à protéger l'installation locale (e.g. le tableau de distribution dans le cas d'une installation domestique) si le courant issu du réseau de distribution dépasse un seuil de courant (I_grid) prédéterminé. Cependant, dans une telle installation de distribution, le disjoncteur principal est incapable de protéger l'installation locale dans le cas où le courant électrique total (I total) égal à la somme du courant issu du réseau (I_grid) et du courant issu de la source locale (I_PV) serait supérieur à un seuil de sécurité I_seuil (par exemple 63 Ampères) lorsque les deux sources génèrent de l'électricité qui est consommée par les charges de l'installation domestique, puisque le disjoncteur principal n'est pas situé sur la même branche de l'installation que la source d'alimentation locale.

Une telle situation peut créer de graves problèmes de sécurité, tels qu'un risque d'incendie, et doit donc être évitée.

La demande de brevet US 2021/083506 A1 décrit un système de gestion de charges électriques comportant une pluralité de circuits de dérivation, un système de capteur et un circuit de commande.

La demande de brevet WO 2018234330 A1 décrit un procédé et une architecture d'alimentation électrique d'un réseau domestique embarqué dans une cabine de passagers pour des équipements électroniques nécessitant des niveaux de tension similaires à ceux de type domestique terrestre.

Il existe donc un besoin pour une installation électrique domestique permettant de connecter facilement une ou plusieurs sources d'alimentation auxiliaires aux côtés de l'arrivée du réseau d'alimentation, sans compromettre la sécurité de l'installation.

En particulier, l'installation doit être facile à mettre en oeuvre, de manière à pouvoir être facilement installée par des électriciens sans avoir besoin de construire des tableaux de distributions complexes et nécessitant une quantité importante de connecteurs et de fils de raccordement, qui sont longs et coûteux à mettre en oeuvre.

A cet effet, l'invention propose, selon un aspect, un système de distribution électrique pour distribuer des courants électriques entre un réseau de distribution électrique et une installation domestique de distribution selon la revendication 1.

Avantageusement, le système de distribution électrique proposé est compact grâce à l'agencement particulier du dispositif de raccordement, et son installation par des électriciens est particulièrement aisée. Avantageusement, la sécurité de système de distribution électrique est assurée par le dispositif de raccordement (ou répartiteur) et les appareils de commutation respectifs.

Le système de distribution électrique selon l'invention peut également présenter une ou plusieurs des caractéristiques des revendications 2 à 12, prises indépendamment ou selon toutes les combinaisons techniquement envisageables.

Selon un autre aspect, l'invention concerne une installation électrique, notamment à usage domestique, comportant un système de distribution électrique tel que brièvement décrit ci-dessus.

D'autres caractéristiques et avantages de l'invention ressortiront de la description qui en est donnée ci-dessous, à titre indicatif et nullement limitatif, en référence aux figures annexées, parmi lesquelles :
[Fig 1] la figure 1 représente schématiquement une installation électrique comprenant un système de distribution électrique selon un premier mode de réalisation ;
[Fig 2] la figure 2 représente schématiquement une installation électrique comprenant un système de distribution électrique selon un deuxième mode de réalisation ;
[Fig 3] la figure 3 représente une installation électrique comprenant un système de distribution électrique dans le cas d'une distribution monophasée ;
[Fig 4] la figure 4 représente schématiquement une vue d'un assemblage intégrant un système de distribution électrique selon un mode de réalisation ;
[Fig 5] la figure 5 représente schématiquement une vue d'un assemblage intégrant un système de distribution électrique selon un autre mode de réalisation ;
[Fig 6] la figure 6 représente schématiquement une vue d'un assemblage intégrant un système de distribution électrique selon un autre mode de réalisation ;
[Fig 7] la figure 7 représente schématiquement une vue d'un assemblage intégrant un système de distribution électrique selon un autre mode de réalisation ;
[Fig 8] la figure 8 représente schématiquement une vue d'un assemblage intégrant un système de distribution électrique selon un autre mode de réalisation ;
[Fig 9] la figure 9 représente schématiquement une vue d'un assemblage intégrant un système de distribution électrique selon un autre mode de réalisation.

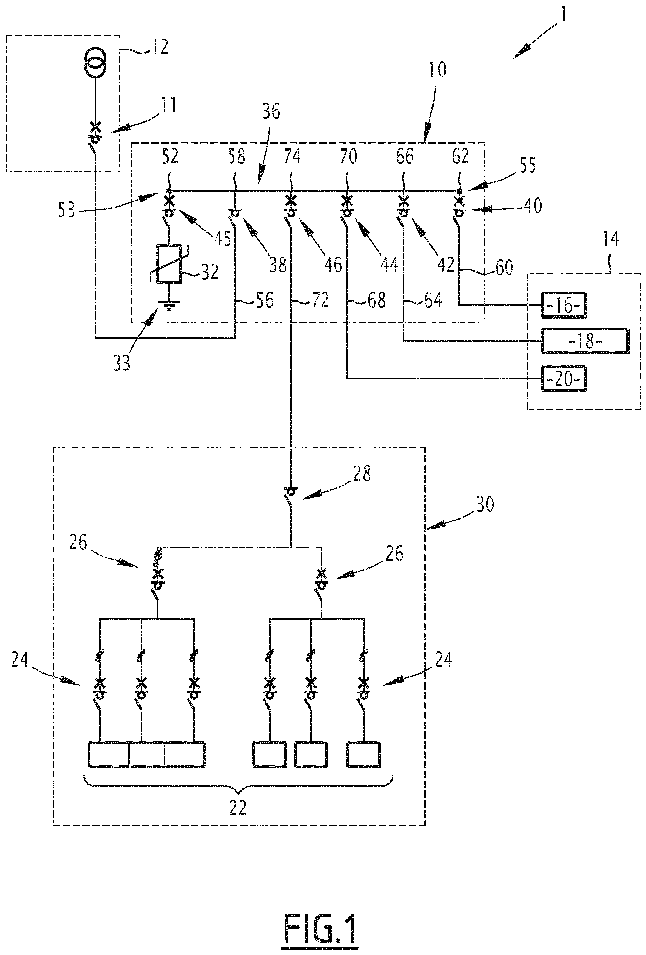

Les figures 1 à 3 représentent schématiquement des modes de réalisation d'un système de distribution d'électricité 10 correspondant à l'invention pour une installation domestique 1.

Les mêmes numéros de référence sont utilisés pour des éléments communs de ces figures.

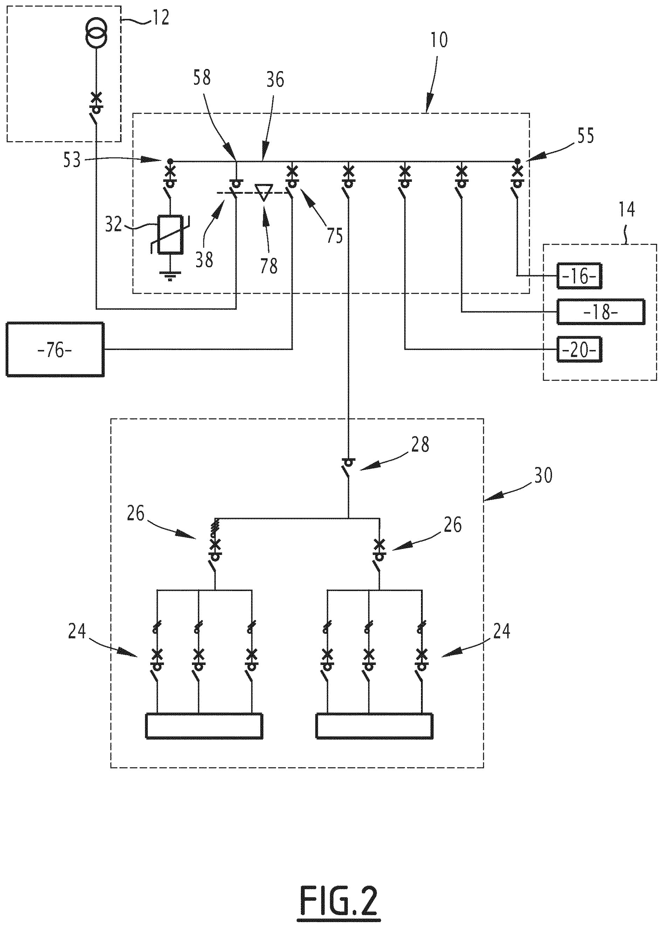

Dans les représentations schématiques des figures 1 et 2, les liaisons électriques sont représentées par de simples traits (unifilaire), mais il est entendu que les systèmes décrits s'appliquent de manière analogue pour une installation monophasée, comportant un conducteur de phase et un conducteur de neutre, ou polyphasée, par avec un nombre N de phases. Par exemple une installation polyphasée peut être tripolaire, comportant trois conducteurs de phases, ou tétrapolaire, comportant trois conducteurs de phases et un conducteur de neutre.

On désigne par point de raccordement un point comportant des bornes de connexion électriques, un point de raccordement pouvant être monophasé ou polyphasé (e.g. triphasé) selon le cas de figure.

Dans de nombreux modes de réalisation, au moins une partie des constituants du système 10 sont logés dans un tableau électrique, ce dernier pouvant être au moins en partie installé dans un tableau électrique (par exemple un tableau mural) ou dans une armoire électrique.

Le système de distribution d'électricité 10 est configuré pour être alimenté par une source d'alimentation électrique principale 12, qui est de préférence un réseau de distribution électrique 12 ( ou « grid » en anglais) et par au moins une source d'alimentation auxiliaire 14, et pour alimenter en électricité une pluralité de charges. Le nombre et la nature des sources d'alimentation électrique auxiliaires 14 peuvent être différents selon les modes de réalisation possibles.

Le réseau de distribution électrique 12 est connecté au système de distribution d'électricité 10 via un appareil de protection électrique 11, par exemple un disjoncteur, ou un fusible, ou un compteur à limitation de puissance.

Dans l'exemple illustré, plusieurs sources d'alimentation auxiliaires 14 sont disponibles.

Dans le mode de réalisation illustré, une des sources d'alimentation auxiliaire est une source d'énergie photovoltaïque ou générateur photovoltaïque, (e.g des panneaux photovoltaïques) 16. En variante, l'installation électrique 1 peut comporter plusieurs générateurs photovoltaïques.

L'installation 1 comporte également un système de stockage d'électricité sur batterie 18, par exemple de type « dimmable » (à variateur), qui peut être une source d'alimentation électrique auxiliaire dite hybride, i.e. qui peut être à la fois une source d'électricité ou une charge, consommatrice d'électricité, pendant une phase de recharge.

L'installation 1 comporte un outre un véhicule électrique ou une station de charge d'un véhicule électrique 20, qui est une source hybride, de même que le système de stockage d'électricité 18, un véhicule électrique pouvant être un dispositif de stockage électrique réversible (configuration « EV to grid »).

Dans une variante, l'installation 1 comporte, en variante ou en complément, un ou plusieurs véhicules électriques (EV) 20 adaptés uniquement à fonctionner en tant que charge (configuration « grid to EV ») lorsqu'ils sont connectés pour la recharge.

Les véhicules électriques font partie des charges critiques (ou principales), susceptibles de consommer des puissances électriques importantes et/ou de consommer des courants électriques d'intensité élevée et/ou d'être actives en continu pendant de longues durées (par exemple plus de 10 heures).

En outre l'installation électrique 1 comporte une pluralité de charges électriques domestiques 22 (ou charges secondaires), par exemple radiateurs, appareils électroménagers, des appareils multimédia, des équipements informatiques, des luminaires, ces exemples n'étant pas limitatifs. Les charges domestiques (ou secondaires) consomment une puissance électrique moindre ou un courant de plus faible intensité que les charges critiques, et leur fonctionnement est généralement intermittent.

Ces charges domestiques 22 sont connectées, via des appareils de protection et de commutation 24, 26 respectifs, qui sont par exemple des disjoncteurs, sur un tableau électrique domestique 30. Ce tableau électrique domestique 30 peut, par exemple, être un tableau classique domestique limité à 63 Ampères (63 A). Le tableau électrique domestique 30 est connecté au système de distribution électrique 10 par l'intermédiaire d'un interrupteur 28, apte à assurer un sectionnement local.

Le tableau électrique domestique 30, ainsi que son câble d'alimentation sont protégés par un appareil de protection 46.

L'installation électrique 1 peut également comporter plusieurs charges à alimenter en électricité, ces charges pouvant comporter, un chauffe-eau, ou une pompe à chaleur (ou climatiseur, ou plus généralement une installation de chauffage domestique), ou un climatiseur ou un système de chauffage de piscine. Ces autres charges à alimenter peuvent être connectées au système de distribution d'électrique 10 via un tableau électrique tel que le tableau électrique domestique 30 ou, en variante, connectées directement au système de distribution électrique 10.

Le système de distribution électrique 10 est configuré pour distribuer l'électricité fournie par les sources d'alimentation principale et auxiliaire(s) respectives aux charges connectées, en fonction des besoins ponctuels, tout en assurant une sécurité globale, notamment en assurant que le courant véhiculé ne dépasse pas des seuils de courant prédéterminés.

Le système de distribution électrique 10 peut comporter un dispositif de protection contre la foudre 32, raccordé à la terre en un point 33. De préférence, le dispositif de protection contre la foudre 32 est connecté, dans le système de distribution électrique 10, à côté et en aval de la connexion du réseau de distribution électrique, comme décrit plus en détail ci-après en référence aux modes de réalisation.

Le système de distribution électrique 10 comporte un dispositif de raccordement électrique 36, agencé pour distribuer un courant électrique dans l'installation, à la manière d'un répartiteur.

Le dispositif de raccordement 36 est agencé pour être connecté respectivement au réseau de distribution électrique 12, qui forme une source d'alimentation électrique principale, via un appareil de commutation principal 38, et à chaque source d'alimentation électrique auxiliaire 34, via un appareil de commutation dit auxiliaire associé.

Chaque appareil de commutation, principal ou auxiliaire, est par exemple un interrupteur ou un disjoncteur, configuré pour commuter entre deux états autorisant ou empêchant respectivement la circulation de courant électrique sur les conducteurs électriques sur lesquels il est connecté.

Dans l'exemple de la figure 1, le générateur photovoltaïque 16 est connecté au dispositif de raccordement 36 via un appareil de commutation dit appareil de commutation auxiliaire 40, le système de stockage d'électricité 18 via un appareil de commutation auxiliaire 42, le véhicule électrique 20 est connecté au dispositif de raccordement 36 via un appareil de commutation auxiliaire 44.

Le tableau électrique domestique 30, sur lequel sont connectés les charges 20, est connecté au dispositif de raccordement 36 via un appareil de commutation dit de charge 46.

Dans le cas où le système de distribution 10 comporte un dispositif de protection contre la foudre 32, celui-ci est connecté au dispositif de raccordement 36 via un appareil de commutation 45 associé, l'appareil de commutation 45 étant par exemple un disjoncteur. Selon une variante, le dispositif de protection contre la foudre 32 et l'appareil de commutation 45 sont combinés.

Le dispositif de protection contre la foudre est connecté au dispositif de raccordement 36 à proximité, par exemple à côté de, du point de raccordement de la source d'alimentation principale. Avantageusement, la minimisation de la longueur de câbles entre le raccordement du dispositif de protection contre la foudre et le point de raccordement de la source principale permet de maximiser l'efficacité du dispositif de protection contre la foudre.

De préférence, le dispositif de protection contre la foudre est raccordé au dispositif de raccordement en un point de raccordement 52 situé à côté (e.g. immédiatement voisin) du point de raccordement 58 auquel est connecté le réseau de distribution électrique 12. Le dispositif de raccordement électrique 36 est formé d'un ou plusieurs conducteurs électriques ou barres de connexion (en anglais « busbar »), chaque barre de connexion étant associée à une phase électrique et une à la ligne de neutre (ou conducteur de neutre), selon le type d'installation.

En variante, certaines installations ne comportent pas de conducteur de neutre.

Les barres de conduction sont par exemple en cuivre.

Selon une variante, chaque barre de connexion est formée par une pluralité de sections conductrices, électriquement connectées pour former un chemin de conduction.

Le dispositif de raccordement électrique 36 peut être considéré comme étant linéaire (également appelé « peigne de connexion »), à plusieurs « étages », chaque étage correspondant à une barre de connexion. Avantageusement, tous les éléments du système de distribution d'électricité 10 de l'installation 1, sources d'alimentation électrique et charges, sont connectés à chaque barre de connexion, de la manière décrite plus en détail ci-après, le dispositif de raccordement 36 permettant de réaliser la connexion sur un étage de connexion.

Le dispositif de raccordement électrique 36 comporte une première extrémité 53, par exemple l'extrémité gauche sur l'exemple de la figure 1, et une deuxième extrémité 55, par exemple l'extrémité droite de la figure 1.

Les termes « première extrémité » et « deuxième extrémité » se réfèrent ici à l'agencement spatial du dispositif de raccordement 36. Les références respectives 53 et 55 désignent les extrémités (ou bords) opposés respectifs du dispositif de raccordement 36, et non des points de raccordement (ou « pin ») dédiés à des connexions électriques au dispositif de raccordement 36.

Dans la suite, un point de raccordement dit de première extrémité (respectivement de deuxième extrémité) est un point de raccordement proche de la première extrémité (respectivement de la deuxième extrémité), au sens d'une proximité spatiale.

Dans une variante, c'est l'extrémité droite du dispositif de raccordement 36 qui est la première extrémité et l'extrémité gauche du dispositif de raccordement 36 qui est la deuxième extrémité.

En d'autres termes, le dispositif de raccordement 36 étant linéaire, les première et deuxième extrémités désignent respectivement les extrémités opposés de ce dispositif de raccordement.

L'agencement du système de distribution d'électricité 10 est tel que chaque source d'alimentation électrique, e.g. le réseau de distribution d'une part et les sources d'alimentation électriques auxiliaires d'autre part, est connectée au dispositif de raccordement 36 via un appareil de commutation correspondant à proximité d'une des extrémités opposées, les charges étant connectées au dispositif de raccordement entre les sources d'alimentation respectives.

Chaque appareil de commutation est de préférence bidirectionnel.

En d'autres termes, chaque appareil de commutation comporte un premier point de raccordement, d'entrée (ou amont) ou de sortie (ou aval) selon le sens du courant électrique, et un deuxième point de raccordement, de sortie (en aval) du d'entrée (amont) selon le sens du courant électrique. En d'autres termes, les points de raccordement sont situés de part et d'autre de l'appareil de commutation.

Dans l'exemple de la figure 1, l'appareil de commutation principal 38 comporte un premier point de raccordement 56 et un deuxième point de raccordement 58.

Dans le système de distribution électrique 10 proposé, la source d'alimentation électrique principale (e.g. le réseau de distribution 12) est connectée au premier point de raccordement 56 de l'appareil de commutation principal 38, le deuxième point de raccordement 58 de l'appareil de commutation principal 38 étant connecté au dispositif de raccordement 36, à proximité de la première extrémité 53 du dispositif de raccordement 36.

En d'autres termes, la source d'alimentation électrique principale (e.g. le réseau de distribution 12) est connectée au dispositif de raccordement 36, via l'appareil de commutation 38, à proximité de la première extrémité du dispositif de raccordement.

Les sources d'alimentation auxiliaires 14 sont connectées les unes à côtés des autres, à proximité de la deuxième extrémité 55 du dispositif de raccordement.

Dans le mode de réalisation de la figure 1, le générateur photovoltaique 16 est connecté au premier point de raccordement 60 de l'appareil de commutation auxiliaire 40, le deuxième point de raccordement 62 de l'appareil de commutation auxiliaire 40 étant connecté au dispositif de raccordement 36.

Le système de stockage d'électricité sur batterie 18 est connecté au premier point de raccordement 64 de l'appareil de commutation auxiliaire 42, le deuxième point de raccordement 66 de l'appareil de commutation auxiliaire 42 étant connecté au dispositif de raccordement 36.

Le véhicule électrique 20, faisant partie dans le mode de réalisation illustré des sources d'alimentation électrique auxiliaires 14, est connecté au premier point de raccordement 68 de l'appareil de commutation auxiliaire 44, le deuxième point de raccordement 70 de l'appareil de commutation auxiliaire 44 étant connecté au dispositif de raccordement 36.

Le tableau électrique domestique 30, portant les charges 22, est connecté au premier point de raccordement 72 de l'appareil de commutation de charge 46, le deuxième point de raccordement 74 de l'appareil de commutation de charge 46 étant connecté au dispositif de raccordement 36.

L'agencement des connexions est réalisé de manière à ce que la ou les charges soient connectées chacune en un point de raccordement dit intermédiaire, situé entre le point de raccordement de première extrémité, utilisé pour connecter la source d'alimentation principale et le ou chaque point de raccordement de deuxième extrémité, utilisé(s) pour connecter les sources d'alimentation électrique auxiliaires.

Le nombre de points de raccordement du dispositif de raccordement est variable, selon les modes de réalisation, ce nombre pouvant être quelconque. En particulier, le nombre de charges et de sources d'alimentation électrique auxiliaires est variable.

En d'autres termes, l'agencement du système de distribution électrique 10 est tel que les sources sont respectivement connectées à proximité des extrémités du dispositif de raccordement 36, respectivement le réseau de distribution à proximité d'une première extrémité (ou d'un premier côté) et la ou les sources d'alimentation auxiliaires à proximité de la deuxième extrémité (ou d'un autre côté), opposée à la première extrémité, et les charges sont toutes connectées entre les sources.

Dans un mode de réalisation, toutes les sources d'alimentation auxiliaires 14 sont raccordées au dispositif de raccordement 36 partant de la deuxième extrémité 55 du dispositif de raccordement 36 en direction de la première extrémité 53 du dispositif de raccordement, les unes après les autres, qu'il s'agisse de sources d'alimentation auxiliaires uniquement fournisseuses d'électricité (e.g. un générateur photovoltaïque) ou des sources d'alimentation auxiliaires hybrides (sources hybrides), fournisseuses et consommatrices d'électricité.

Dans un mode de réalisation, partant de la deuxième extrémité 55 du dispositif de raccordement 36 en direction de la première extrémité 53 du dispositif de raccordement, sont d'abord connectés les sources d'alimentation électrique auxiliaires (e.g. 16 ; 18), puis ensuite les sources d'alimentation électrique auxiliaire hybride (e.g. 20), pouvant fonctionner à la fois en tant que source d'alimentation électrique et en tant que charge.

De plus, l'agencement du système de distribution d'électricité 10 est tel que chaque source d'alimentation électrique, e.g. le réseau de distribution d'une part et les sources d'alimentation électriques auxiliaires d'autre part, sont connectées au dispositif de raccordement via un appareil de commutation correspondant.

Avantageusement, le dispositif de raccordement 36 est dimensionné (ou calibré) pour supporter et distribuer un courant d'intensité électrique, appelée seuil de courant maximal, égale au maximum entre le courant électrique maximum fourni par le réseau de distribution électrique (ou plus généralement, par la ou les sources connectées à proximité de la première extrémité) et la somme des courants électriques maximum fournis par la ou par la pluralité de sources électriques auxiliaires (ou plus généralement, par la ou les sources connectées à proximité de la deuxième extrémité).

Par exemple, si la source d'alimentation principale est calibrée pour ne pas dépasser 63 Ampères, et les sources d'alimentation auxiliaires fournissent respectivement 26 Ampères et 22 Ampères, aboutissant à un total maximal de 48 Ampères, le dispositif de raccordement 36 est calibré pour supporter 63 Ampères, tout en étant adapté pour fournir un total de 111 Ampères aux charges connectées entre les sources principale et auxiliaires respectives.

Avantageusement, cela permet de réaliser une simplification et une économie de ressources, par exemple de matériaux formant les barres de connexion du dispositif de raccordement par rapport à un répartiteur classique, qui, pour supporter une distribution de 111 Ampères, doit être dimensionné en conséquence.

Dans le mode de réalisation de la figure 2, l'installation 1 comporte en outre un générateur de secours 76, par exemple un groupe électrogène, le dispositif de raccordement 36 étant configuré pour distribuer également l'électricité fournie par le générateur de secours 76, lorsque celui-ci remplace le réseau de distribution et forme la source d'électricité principale alternative.

Le générateur de secours 76 (ou source de secours) comporte un dispositif d'inter-verrouillage 78 (ou enclenchement de sécurité), appelé « interlocking device » en anglais, qui permet d'inter-verrouiller l'appareil de commutation principal et l'appareil de commutation 75, via lequel le générateur de secours est connecté au dispositif de raccordement 36, de manière à assurer que seule l'une des sources d'alimentation électrique principale 12 ou 76 est connecté au dispositif de raccordement 36 en même temps. L'appareil de commutation 75 est par exemple un interrupteur sectionneur.

Ainsi, le dispositif d'inter-verrouillage 78 permet de choisir entre d'une part la source de secours 76 et d'autre part le réseau de distribution 12 pour alimenter le dispositif de raccordement 36 par la première extrémité 53 du dispositif de raccordement.

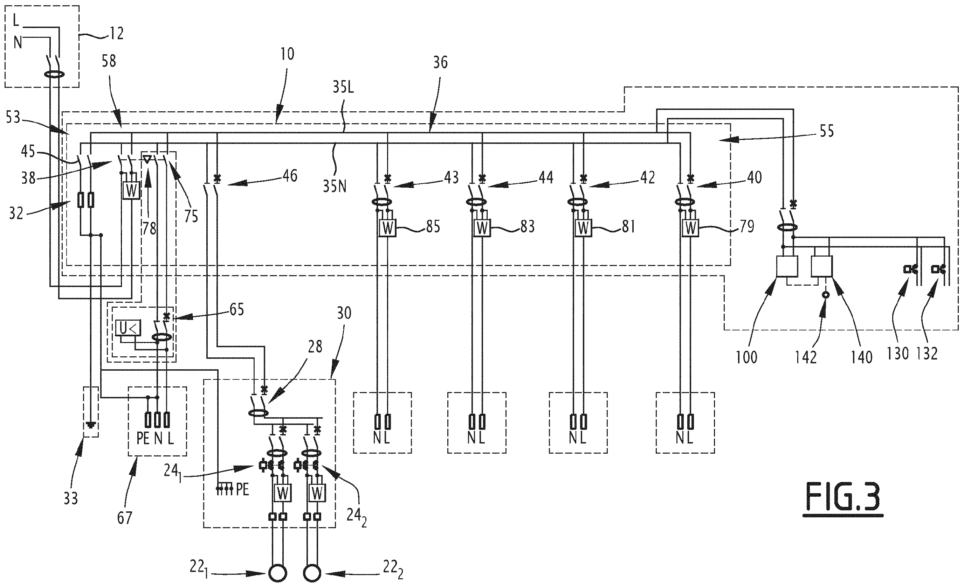

La figure 3 illustre de manière plus détaillée un mode de réalisation du système de distribution électrique 10, dans le cas d'une installation monophasée avec neutre, dans laquelle le courant électrique est acheminé par un conducteur de phase (noté L) et un conducteur de neutre (noté N), également appelé ligne de neutre. De même, comme visible sur la figure 3, chaque source électrique et chaque charge électrique comporte un connecteur de phase (L) et un connecteur de neutre (N). Dans certains cas, des charges électriques peuvent comporter en plus un connecteur de mise à la terre (noté PE).

Dans cet exemple, il y a donc deux conducteurs (de neutre N et de phase L) pour chaque chemin de conduction.

En particulier, le dispositif de raccordement comme une barre de connexion 35L qui est un conducteur de phase et une barre de connexion 35N qui est un conducteur de neutre.

De plus, de dans mode de réalisation de la figure 3, une charge supplémentaire 21, par exemple un véhicule électrique purement consommateur d'électricité., qui est connecté au dispositif de raccordement 36 via un appareil de commutation de charge 43.

En outre, les liaisons électriques comportent des dispositifs de mesure, représentés par le symbole « W » sur la figure, capables de mesurer la puissance électrique fournie par les sources électriques (notamment par le réseau 12 et par la chaque source d'alimentation auxiliaire 16, 18, 20) et/ou la puissance électrique transitant par les différents appareils de commutation .

Il peut, par exemple, s'agir d'un ou de plusieurs capteurs de courant et/ou capteurs de tension et/ou Wattmètres (W) et/ou tout dispositif de mesure équivalent ou approprié.

Par exemple, un premier dispositif de mesure 75 est associé au réseau 12, des dispositifs de mesure 79, 81 sont associés aux sources d'alimentation auxiliaires 16, 18, et des dispositifs 83, 85 sont associés aux sources hybrides ou charges 20, 21.

Ces dispositifs de mesure fournissent des mesures de courant et/ou de tension et/ou de puissance qui sont fournies à un dispositif électronique de commande 100, qui est configuré pour gérer automatiquement la répartition du courant électrique entre les charges électriques, notamment dans le cas du dépassement du seuil de courant maximal pour lequel le dispositif de raccordement est calibré, mais la maximisation de l'autoconsommation, et bien d'autres scénarios d'usage.

Le dispositif électronique de commande 100 est associé à des lignes de commande pourvues chacune d'un interrupteur pilotable 130, 132, tel qu'un relais ou un interrupteur de puissance à semi-conducteurs, qui permettent respectivement de déclencher la commutation des appareils de commutation et de protection 24-1 et 24-2, afin de réguler la consommation électrique des charges 22 connectées sur les diverses branches.

De plus, le dispositif électronique de commande comporte ou est connecté à une interface de communications 140, qui permet diverses fonctionnalités de communication, par exemple avec un réseau extérieur (e.g. Internet), ce qui permet de réaliser des fonctions de pilotage à distance.

Le dispositif électronique de commande 100 est configuré pour mettre en oeuvre un procédé de gestion de la répartition du courant électrique fourni/consommé, en fonction des mesures de courant et/ou de tension et/ou de puissance fournies par les divers dispositifs de mesure (e.g. capteurs), et des limites de courant ou de puissance imposées, notamment par la calibration du dispositif de raccordement 36, et par le réseau de distribution électrique. Par exemple, le dispositif électronique de commande 100 est configuré pour gérer des paramètres d'alimentation d'au moins une partie des charges électriques afin de réduire le courant consommé et/ou gérer au moins une partie des paramètres de fonctionnement d'au moins une partie des sources d'alimentation électrique auxiliaires pour réduire le courant délivré par ces sources.

Dans le mode de réalisation de la figure 3, le dispositif de protection contre la foudre 32 comporte une ou plusieurs varistances connectées entre le dispositif de raccordement 36 et un point de raccordement à la terre 33 de l'installation électrique connecté au bornier de raccordement 67. Par exemple, une varistance est connectée sur chaque conducteur électrique 35L, 35N (un pour la phase L et un pour le neutre N) du dispositif de raccordement 36, via un appareil de commutation 45, qui est de préférence un appareil de commutation et de protection, par exemple un disjoncteur.

Dans le mode de réalisation de la figure 3, la source de secours 76 comporte un appareil de protection 65, connecté entre l'interrupteur sectionneur 75 et le bornier de raccordement 67.

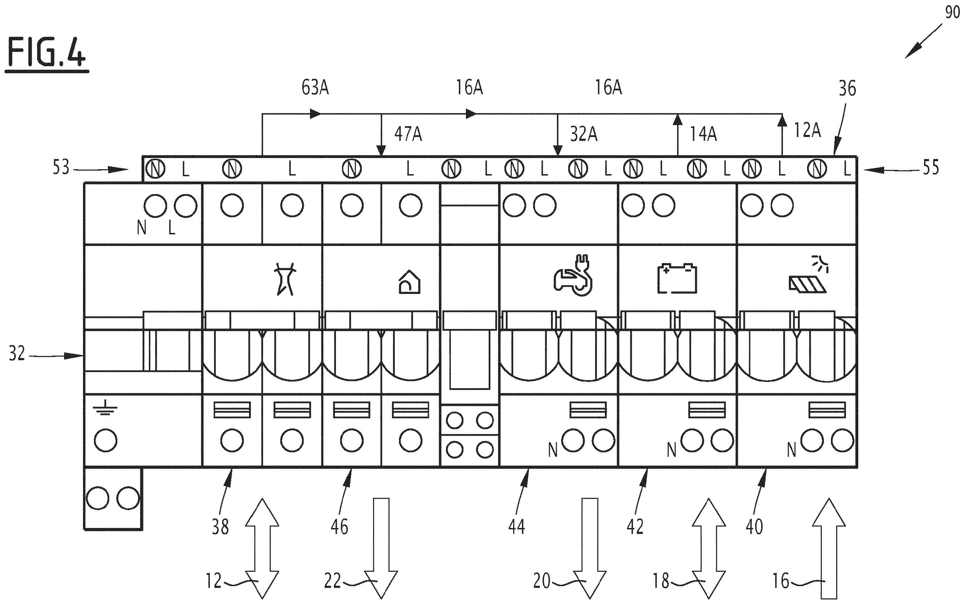

La figure 4 est une représentation schématique d'une vue d'un assemblage 90, intégrant un système de distribution d'électricité comportant un dispositif de raccordement 36 selon un mode de réalisation.

Dans ce mode de réalisation, l'assemblage 90 est par exemple un tableau électrique, par exemple un tableau mural, ou une armoire électrique.

Dans l'assemblage 90, le système de distribution électrique est configuré pour distribuer l'électricité en provenance d'une source d'alimentation principale qui est le réseau de distribution 12, et des sources d'alimentation auxiliaires 16, 18, vers des charges respectives 20, 22.

Les flèches représentées sous l'assemblage 90 indiquent le sens de circulation du courant électrique formant un chemin de conduction électrique dans le système de distribution électrique, dans un exemple de fonctionnement.

Le dispositif de raccordement 36 comporte, en façade, des points de raccordement de phase L alternant avec des points de raccordement de neutre N, disposés à une distance choisie, par exemple de 18mm et 36mm, adaptée pour la connexion des appareils de commutation correspondants, tels que des disjoncteurs, pour installations domestiques.

L'assemblage 90 est particulièrement compact.

Dans un mode de réalisation avantageux, le dispositif de raccordement 36 faisant partie de l'assemblage 90 comporte, sur une face visible, des éléments détrompeurs, destinés à guider l'installation par un électricien, en indiquant notamment l'ordre d'agencement des connexions des appareils électriques (sources et charges), partant du dispositif de protection contre la foudre, suivi du réseau de distribution électrique, des charges éventuelles puis des sources d'électricité auxiliaires, hybrides ou non. Les éléments détrompeurs sont par exemple positionnés au niveau des bornes de raccordements (en anglais « pins ») permettant la connexion au points de raccordement respectifs du dispositif de raccordement 36.

Avantageusement, la présence de détrompeurs permet de faciliter le raccordement des appareils électrique sur les « pins » du dispositif de raccordement 36.

La source 18 est une source hybride, pouvant fonctionner à la fois en tant que source d'alimentation électrique et de charge consommatrice d'électricité.

De même, le réseau de distribution 12 est une source distante où l'on peut soutirer ou injecter de l'énergie, capable de recevoir l'électricité produite par une ou plusieurs des sources d'alimentation auxiliaires lorsque l'électricité produite par ces sources d'alimentation auxiliaires n'est pas consommée par les charges connectées entre la source d'alimentation principale et les sources d'alimentation auxiliaires.

A titre d'exemple illustratif, un chemin de conduction électrique est illustré à l'aide de flèches au-dessus du dispositif de raccordement 36. Dans cet exemple, le réseau de distribution électrique 12 fournit 63 A. Les charges domestiques 22 (la référence 22 ici désignant le tableau de distribution 30 comportant plusieurs charges domestiques connectées) consomment 47 A.

En outre, la source d'alimentation auxiliaire 16 (e.g. un générateur photovoltaïque) injecte 12 A vers le dispositif de raccordement 36, et la source d'alimentation auxiliaire 18 (e.g. un système de stockage d'électricité sur batterie) injecte 4A vers le dispositif de raccordement 36. Ainsi, les sources d'alimentation électriques auxiliaires fournissent 16A dans cet exemple.

Le véhicule électrique 20 consomme, pour se charger, un courant d'intensité 32A, ce courant étant fourni via le dispositif de raccordement 36, d'une part par les 16A restants du courant fourni par le réseau de distribution électrique, et d'autre part, par les sources d'alimentation auxiliaires 16 et 18 conjointement.

Au total, dans l'exemple illustré à la figure 4, les charges de l'installation électrique consomment en même temps 79A.

Avantageusement, dans ce cas de figure, un dispositif de raccordement calibré pour acheminer 63A est capable de fournir le courant consommé, sans nécessiter la mise en oeuvre d'une régulation électronique de la distribution d'électricité. En effet, grâce à l'agencement proposé, le chemin de conduction est tel que la limite des 63A (seuil de courant maximal autorisé) n'est dépassée sur aucun des conducteurs respectifs du dispositif de raccordement 36.

Bien entendu, l'exemple de la figure 4 est fourni à titre d'exemple non limitatif, bien d'autres répartitions de distribution du courant électrique étant envisageables entre source d'alimentation principale, sources d'alimentation auxiliaires et charges, incluant des cas de figure dans lesquels les sources hybrides fonctionnent en tant que charges et donc sont consommatrices d'électricité.

Le système de distribution électrique 10 et le dispositif de raccordement 36 ont été décrits ci-dessus dans le cas d'une installation monophasée. On comprend qu'en variante, dans un système 10 de distribution électrique polyphasé, par exemple triphasé et neutre, les configurations décrites sont généralisées pour chacune des phases électriques et de la ligne de neutre. En particulier, le dispositif de raccordement comprend autant de barres de conduction qu'il y a de phases, et le cas échéant en ajoutant, un conducteur de neutre.

En variante, le système de distribution est également généralisable dans le cas où l'installation est polyphasée sans conducteur de neutre.

Avantageusement, la généralisation pour un système polyphasé est simple, le raccordement des sources et des charges respectives se faisant par des points de raccordement polyphasés correspondants.

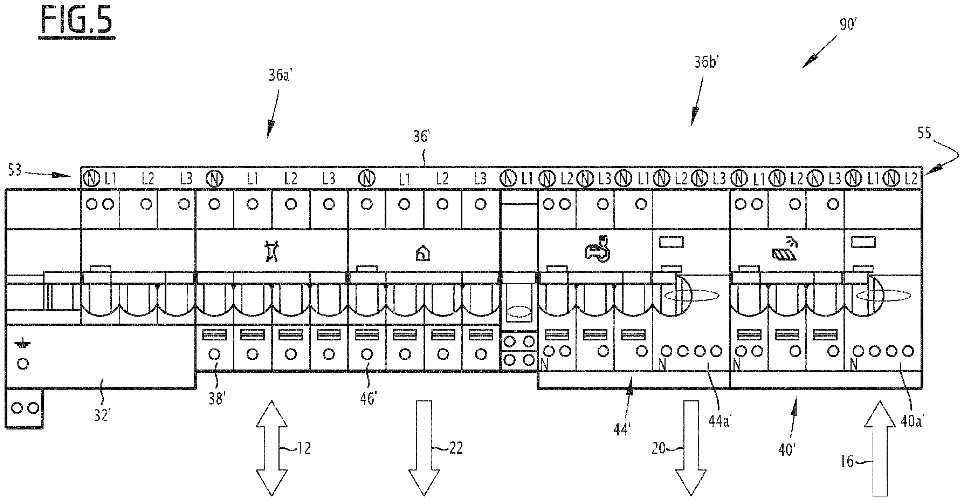

La figure 5 représente schématiquement une vue d'un assemblage 90' intégrant un système de distribution électrique selon une variante du mode de réalisation de la Figure 4, intégrant un système de distribution d'électricité comportant un dispositif de raccordement 36' selon un mode de réalisation. Les mêmes éléments de l'assemblage 90' sont désignés avec les mêmes numéros de référence que sur les figures précédentes, en particulier avec une prime pour une variante d'un élément. Figure 5 montre un mode de réalisation triphasé avec les phases L1, L2, L3 et la ligne neutre N.

Dans ce mode de réalisation, l'assemblage 90' est par exemple un tableau électrique, par exemple un tableau mural, ou une armoire électrique.

Dans l'assemblage 90', le système de distribution électrique est configuré pour distribuer l'électricité en provenance d'une source d'alimentation principale qui est le réseau de distribution 12, et des sources d'alimentation auxiliaires 16 vers des charges respectives 20, 22.

Les flèches représentées sous l'assemblage 90' indiquent le sens de circulation du courant électrique (triphasé) formant un chemin de conduction électrique dans le système de distribution électrique, dans un exemple de fonctionnement.

Le dispositif de raccordement électrique 36' correspond essentiellement au dispositif de raccordement électrique 36 des Figures 1 à 4. A la différence des Figures 1 à 4 le dispositif de raccordement 36' est propre pour être utilisé dans une assemblage 90' pour des courants triphasés. Le dispositif de raccordement 36' électrique peut être considéré comme étant linéaire (également appelé « peigne de connexion »), à plusieurs « étages », chaque étage correspondant à une barre de connexion, respectivement une barre pour chaque phase L1, L2, L3 et le conducteur neutre N. Donc, les points de raccordement sont triphasé.

Le dispositif de raccordement 36' comporte, en façade, sur un premier tronçon 36a' des points de raccordement triphasé comprenant des bornes de connexion électriques des phases L1, L2, L3 alternant, en groupe, avec des bornes de connexion neutre N, disposés à une distance choisie, par exemple de 18mm et 36mm, adaptée pour la connexion des appareils de commutation 32', 38', 40', 44', 46' correspondants, tels que des disjoncteurs, pour installations domestiques pour le dispositif de protection contre la foudre, le réseau 12 et les charges électriques domestiques 22.

En outre, le dispositif de raccordement 36' comporte, en façade, sur un deuxième tronçon 36b' adjacent au premier tronçon 36a' des points de raccordement comprenant des bornes de connexion électriques des phases L1, L2, L3 alternant avec des bornes de connexion neutre N, disposés à une distance choisie, par exemple de 18mm et 36mm, adaptée pour la connexion des appareils de commutation correspondants, tels que des disjoncteurs, en particulier pour la charge concernant le véhicule électrique, c'est-à-dire la station de charge ou le véhicule, et les sources d'alimentation auxiliaire 16. Le disjoncteur, par exemple pour la source d'alimentation auxiliaire 16 ou la charge concernant le véhicule électrique 20 sont respectivement connectées au trois phases L1, L2, L3 et au conducteur neutre N. Dans un mode de réalisation le ou les disjoncteurs ne sont pas connecté à tous les points de raccordement au-dessus d'eux. Par exemple, l'appareil de commutation 44' et seulement connecté à gauche à la borne de connexion du conducteur neutre N et ensuite aux bornes de connexion des conducteurs L2, L3 et L1 du dispositif de raccordement 36'. Les autres bornes de connexion au-dessus de l'appareil de commutation 44' restent inutilisés.

Dans un mode de réalisation, d'autres produits peuvent être connecté latéralement aux appareils de commutations auxiliaires 40, 44 sans être connectés au dispositif de raccordement 36', par exemple un déclencheur à minimum de tension 44a', 40a'

L'assemblage 90 est particulièrement compact.

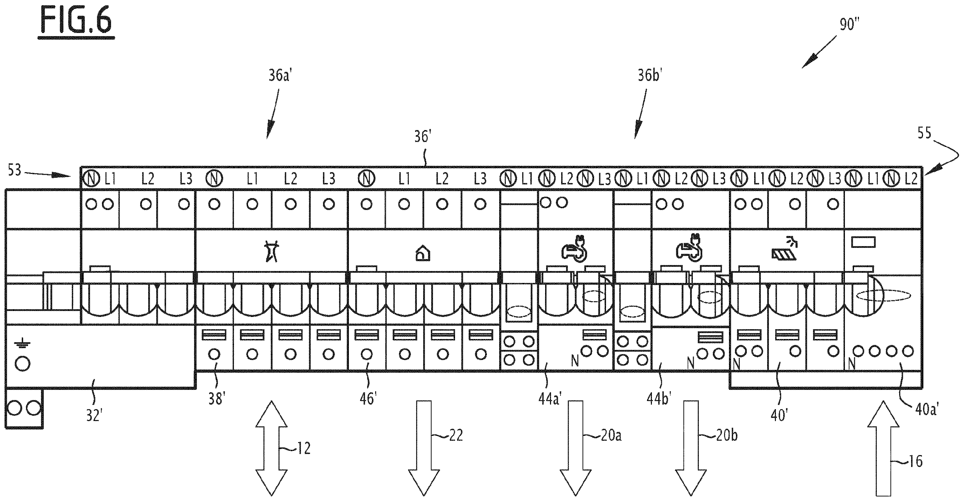

Dans un mode de réalisation avantageux comme décrit pour le mode de réalisation de la Figure 4, le dispositif de raccordement 36' faisant partie de l'assemblage 90' comporte, sur une face visible, des éléments détrompeurs, destinés à guider l'installation par un électricien. La figure 6 représente schématiquement une vue d'un assemblage 90" intégrant un système de distribution électrique selon une variante du mode de réalisation de la Figure 5, intégrant un système de distribution d'électricité comportant un dispositif de raccordement 36' selon un mode de réalisation qui est identique au dispositif de raccordement 36' de la figure 5. Les mêmes éléments de l'assemblage 90" sont désignés avec les mêmes numéros de référence que sur la figure 5. La Figure 6 montre un mode de réalisation triphasé avec les phases L1, L2, L3 et la ligne neutre N.

Dans ce mode de réalisation, l'assemblage 90" est par exemple un tableau électrique, par exemple un tableau mural, ou une armoire électrique.

Dans l'assemblage 90", le système de distribution électrique est configuré pour distribuer l'électricité en provenance d'une source d'alimentation principale qui est le réseau de distribution 12, et des sources d'alimentation auxiliaires 16 vers des charges respectives 20a, 20b, 22.

Les flèches représentées sous l'assemblage 90" indiquent le sens de circulation du courant électrique (monophasé ou triphasé) formant un chemin de conduction électrique dans le système de distribution électrique, dans un exemple de fonctionnement.

En différence à la Figure 5, l'assemblage comprend deux appareils de commutation auxiliaires 44a", 44b" pour les charges 20a, 20b. Les deux appareils de commutations sont respectivement monophasés et seulement connecté à des points de monophasé, ici respectivement la phase L2, et pour le conducteur neutre N. Les charges 20a, 20b sont, par exemple, respectivement un véhicule électrique.

Dans la Figure 5 et 6 toutes les charges purement consommatrices d'électricité sont connectées électriquement et sont également situées entre la source d'alimentation principale et la ou les sources d'alimentation auxiliaires.

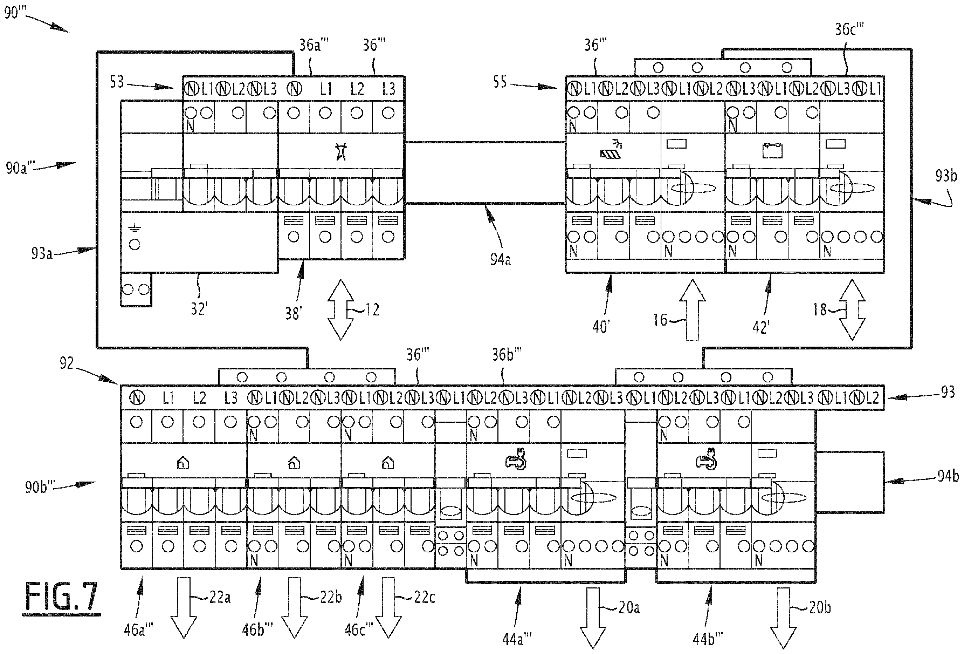

La figure 7 représente schématiquement une vue d'un assemblage 90'" intégrant un système de distribution électrique selon une variante du mode de réalisation de la Figure 5, intégrant un système de distribution d'électricité comportant un dispositif de raccordement 36'" selon un mode de réalisation. Les mêmes éléments de l'assemblage 90‴ sont désignés avec les mêmes numéros de référence que sur les figures précédentes, en particulier avec trois primes pour les variantes d'un élément. Figure 7 montre un mode de réalisation triphasé avec les phases L1, L2, L3 et la ligne neutre N.

Dans ce mode de réalisation, l'assemblage 90'" est par exemple un tableau électrique, par exemple un tableau mural, ou une armoire électrique.

Dans l'assemblage 90‴, le système de distribution électrique est configuré pour distribuer l'électricité en provenance d'une source d'alimentation principale qui est le réseau de distribution 12, et des sources d'alimentation auxiliaires 16, 18 vers des charges respectives 20a, 20b, 22a, 22b, 22c. Les charges 20a, 20b, 22a, 22b, 22c correspondent respectivement au charges 20, 22 des Figures 1 à 4. L'assemblage 90'" comprend deux rangées, notamment une rangée supérieure 90a‴ et une rangée inférieure 90b‴. Dans un autre mode de réalisation l'assemblage 90‴ comporte trois rangées.

Les flèches représentées sous l'assemblage 90‴ indiquent le sens de circulation du courant électrique (triphasé) formant un chemin de conduction électrique dans le système de distribution électrique, dans un exemple de fonctionnement.

Le dispositif de raccordement électrique 36‴ correspond électriquement au dispositif de raccordement électrique 36' des Figures 5 ou 6. Le dispositif de raccordement 36‴ électrique comprend plusieurs tronçons linéaires 36a‴, 36b‴, 36c‴ (également appelé « peigne de connexion »), à plusieurs « étages », chaque étage correspondant à une barre de connexion, respectivement une barre pour chaque phase L1, L2, L3 et le conducteur neutre N.

Le dispositif de raccordement 36‴ comprend, en façade, pour chaque tronçon 36a‴, 36b‴, 36c‴ des points de raccordement comprenant des bornes de connexion électriques des phases L1, L2, L3 alternant, en particulier en groupe, avec des bornes de connexion neutre N de phase L1, L2, L3. Les bornes de connexion sont disposées à une distance choisie, par exemple de 18mm et 36mm, adaptée pour la connexion des appareils de commutation correspondants, tels que des disjoncteurs.

Le premier tronçon 36a‴ et le troisième tronçon 36c‴ sont agencés dans la première rangée 90a‴ et le deuxième tronçon 36b‴ est agencé dans la deuxième rangée 90b‴.

Les conducteurs, par exemple les barres, du premier tronçon 36a‴ sont respectivement électriquement connectés ou raccordés aux conducteurs, par exemple des barres, correspondants du deuxième tronçon 36b‴, en particulier à une première extrémité 92 ou à proximité de la première extrémité du deuxième tronçon 36b‴. Les conducteurs, par exemple les barres, du troisième tronçon 36c‴ sont respectivement électriquement connectés aux conducteurs, par exemple des barres, correspondants du deuxième tronçon 36b‴, en particulier à une deuxième extrémité 93 ou à proximité de la deuxième extrémité du deuxième tronçon 36b‴. Par exemple, les connexions électriques entre les tronçons 36a‴, 36b‴ et 36c‴ sont établies par un ou plusieurs câbles 93a, 93b.

Les appareils de commutation 32', 38' tels que des disjoncteurs pour le dispositif de protection contre la foudre et le réseau 12 sont connectés au premier tronçon 36a‴. Les appareils de commutation 44a‴,44b‴,46a‴, 46b‴, 46c‴ tels que des disjoncteurs pour le dispositif pour les charges électriques domestiques 22a, 22b, 22c, 20a, 20b sont connectés au deuxième tronçon 36b‴. Les appareils de commutation 40', 42' tels que des disjoncteurs pour le dispositif pour les sources d'alimentation auxiliaire 16, 18 sont connectés au troisième tronçon 36b‴. Dans un mode de réalisation avantageux comme décrit pour le mode de réalisation de la Figure 7, le dispositif de raccordement 36‴ faisant partie de l'assemblage 90‴ comporte, sur une face visible, des éléments détrompeurs, destinés à guider l'installation par un électricien.

Figure 7 montre en outre deux rails de fixation mécanique 94a, 94b pour les différents appareils de commutations définissants les deux rangées 90a‴, 90b‴.

Le mode de réalisation de la figure 7 est électriquement identique, c'est-à-dire d'un point de vue du circuit électrique, au mode de réalisation des figures précédentes, en particulier des figures 5 et 6. Par exemple, la deuxième extrémité 55, d'un point de vue électrique est située à gauche sur le troisième tronçon 36c‴ du dispositif de raccordement 36‴ sur la figure 7. Donc, l'appareil de commutation des sources d'alimentation électrique auxiliaire sont connectées à un point de raccordement de deuxième extrémité, en particulier au moins d'un point de vue électrique, du dispositif de raccordement 36‴, situé à proximité d'une deuxième extrémité 55. De plus, les charges purement consommatrices d'électricité sont connectées, électriquement, entre la source d'alimentation principale 12 et la ou les sources d'alimentation auxiliaires 16, 18 au dispositif de raccordement 36‴. En d'autres mots chaque appareil de commutation de charge étant connecté à un point de raccordement intermédiaire étant électriquement, c'est-à-dire d'un point de vue du circuit électrique, entre ledit premier point de raccordement et le ou chaque deuxième point de raccordement.

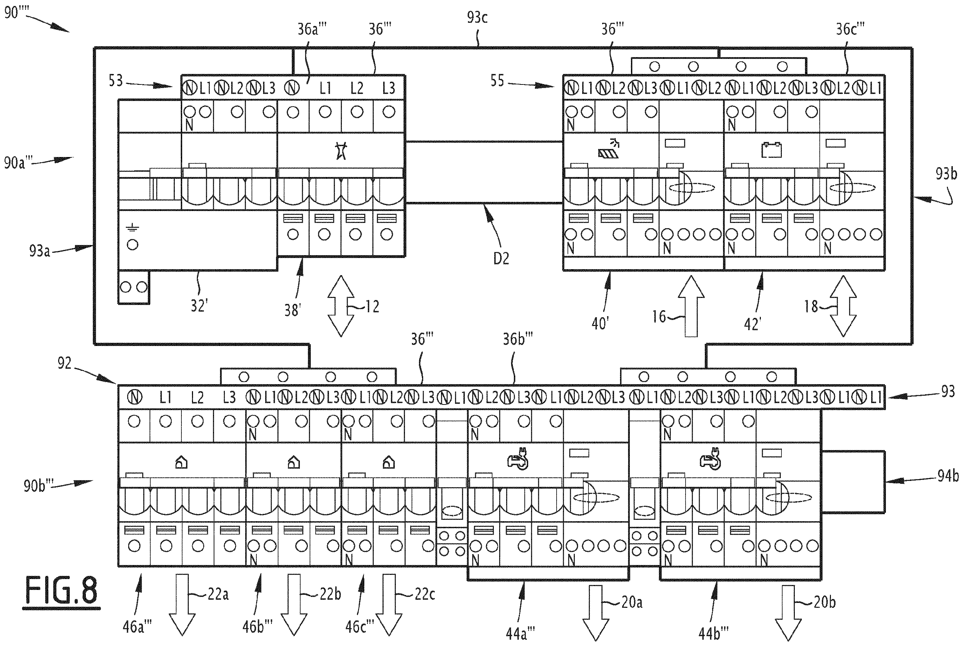

La figure 8 représente schématiquement une vue d'un assemblage 90ʺʺ intégrant un système de distribution électrique selon une variante du mode de réalisation de la Figure 7. La seule différence par rapport à l'assemblage 90‴ de la Figure 7 est une connexion électrique supplémentaire 93c entre le premier tronçon 36a‴ et le troisième tronçon 36c‴ du dispositif de raccordement 36‴. Les conducteurs, par exemple les barres, du troisième tronçon 36c‴ sont respectivement électriquement connectés aux conducteurs, par exemple des barres, correspondants du premier tronçon 36a‴. La connexion électrique supplémentaire 93c permet, lorsque les source d'alimentations auxiliaires 16, 18 produisent une énergie excédant la consommation de l'énergie par les charges 20a, 20b, 22a, 22b, 22c, d'injecter directement cette énergie excédant dans le réseau de distribution électrique 12, sans passer par le deuxième tronçon 36b‴ du dispositif de raccordement 36‴. Cette connexion électrique supplémentaire 93c permet de réduire le flux du courant électrique dans le deuxième tronçon 36b‴ du dispositif de raccordement 36‴. Les charges 22a, 22b, 22c 20a, 20b purement consommatrices d'électricité sont connectées, électriquement, entre la source d'alimentation principale 12 et la ou les sources d'alimentation auxiliaires 16, 18 au dispositif de raccordement 36‴.

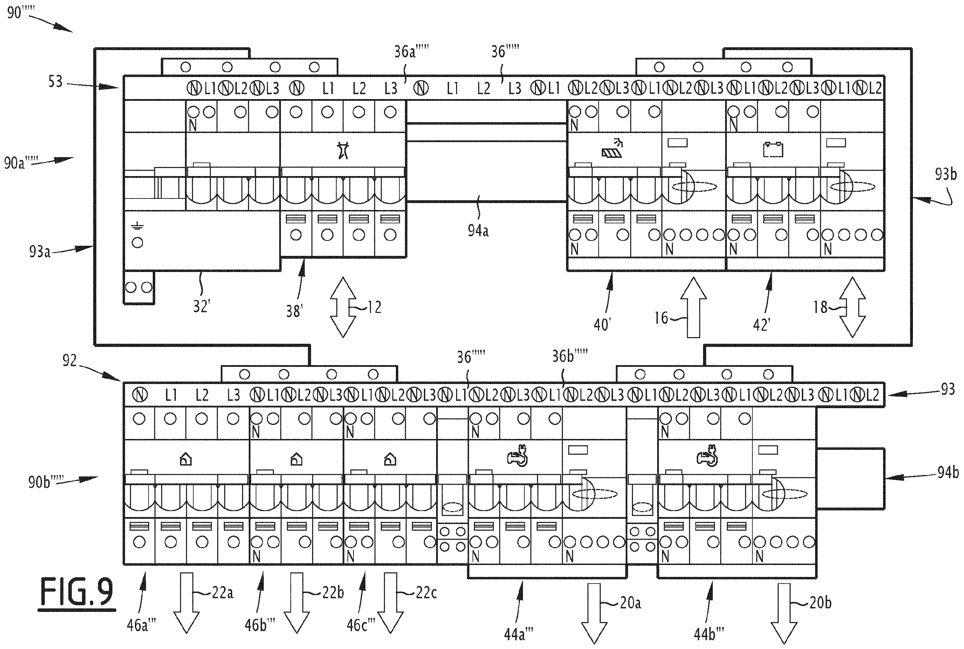

La figure 9 représente schématiquement une vue d'un assemblage 90'"" intégrant un système de distribution électrique selon une variante du mode de réalisation de la Figure 8. La seule différence par rapport à l'assemblage 90‴ de la Figure 7 que le dispositif de raccordement 36'"" comprend seulement un premier tronçon 36a'"" et un deuxième tronçon 36b‴ʺ. Le premier tronçon 36a'"" intègre dans sa partie intermédiaire la fonction de la connexion électrique supplémentaire 93c du dispositif de raccordement 36‴ de la Figure 8.

Avantageusement, le système de distribution proposé est particulièrement compact, et sa mise en oeuvre est adaptée pour une installation existante, le travail de l'électricien étant facilité.

De plus, pour un même dispositif de raccordement, il est possible de modifier par exemple le nombre de sources d'alimentation électrique auxiliaires, par exemple en rajoutant une source d'alimentation électrique auxiliaire supplémentaire et en enlevant une des charges, à condition de connecter la source d'alimentation électrique auxiliaire supplémentaire de manière à ce que toutes les charges purement consommatrices d'électricité soient connectées électriquement entre la source d'alimentation principale et la ou les sources d'alimentation auxiliaires.

Avantageusement, une protection du système de distribution d'électricité contre des surcharges est assurée, et la maintenance est facilitée par la présence d'un point de coupure unique pour le système de distribution d'électricité, garantissant la sécurité de l'opérateur.

## Revendications

1. Système de distribution électrique pour distribuer des courants électriques entre un réseau de distribution électrique et une installation domestique de distribution (1), dans lequel le système de distribution électrique (10) comporte
- un dispositif de raccordement (36) agencé pour distribuer un courant électrique dans l'installation (1), à partir de sources comportant un réseau de distribution électrique (12) et au moins une source d'alimentation électrique auxiliaire (14, 16, 18, 20, 20a, 20b), vers au moins une charge consommatrice d'électricité (21, 22, 22a, 22b, 22c),
- le dispositif de raccordement (36, 36', 36‴, 36"") comprend au moins un tronçon linéaire, chaque tronçon linéaire comportant une pluralité de conducteurs électriques (35L, 35N) adaptés à acheminer le courant électrique selon un chemin de conduction électrique,
- le système (10) comportant un appareil de commutation principal (38), connecté entre le réseau de distribution électrique (12) et un premier point de raccordement (58), l'appareil de commutation principal (38) étant configuré pour commuter entre deux états autorisant ou empêchant respectivement la circulation de courant électrique du réseau de distribution électrique (12) vers le dispositif de raccordement (36, 36', 36‴, 36‴ʺ),
- pour la ou chaque source d'alimentation électrique auxiliaire (14, 16, 18, 20, 20a, 20b), respectivement un appareil de commutation auxiliaire (40, 42, 44, 40', 44', 44a‴, 44b‴, 46', 46a‴, 46b‴, 46c‴), connecté entre ladite source électrique auxiliaire et un deuxième point de raccordement (62, 66, 70), chaque appareil de commutation auxiliaire étant configuré pour commuter entre deux états autorisant ou empêchant respectivement la circulation de courant électrique de la source d'alimentation électrique auxiliaire associée vers le dispositif de raccordement (36, 36', 36‴, 36""'),
- le système de distribution électrique (10) comportant en outre au moins un appareil de commutation de charge (42, 42', 44, 46, 44', 44a‴, 44b‴, 46', 46a‴, 46b‴, 46c'''), connecté entre au moins une charge (30, 22, 22a, 22b, 22c) et le dispositif de raccordement (36), l'appareil de commutation de charge étant configuré pour commuter entre deux états autorisant ou empêchant respectivement la circulation de courant électrique du dispositif de raccordement vers au moins une charge, consommatrice d'électricité (22, 22a, 22b, 22c),
- le ou chaque appareil de commutation de charge (42, 42', 44, 46, 44', 44a‴, 44b‴, 46', 46a‴, 46b‴, 46c‴) étant connecté électriquement au dispositif de raccordement (36, 36', 36‴, 36""') à un point de raccordement intermédiaire (70, 74) étant électriquement entre ledit premier point de raccordement et le ou chaque deuxième point de raccordement,
le système étant **caractérisé en ce que** les conducteurs électriques du dispositif de raccordement (36) sont calibrés pour acheminer un courant d'intensité électrique de seuil de courant maximal, le seuil de courant maximal étant égal au maximum entre le courant électrique maximum fourni par le réseau de distribution électrique (12) et la somme des courants électriques maximum fournis par la ou par la pluralité de sources électriques auxiliaires (14).

2. Système de distribution électrique selon la revendication 1, dans lequel le premier point de raccordement (58) est un point de raccordement de première extrémité du dispositif de raccordement, situé à proximité d'une première extrémité (53) du dispositif de raccordement (36, 36', 36‴) et le deuxième point de raccordement (62, 66, 70) est un point de raccordement (62, 66, 70) de deuxième extrémité du dispositif de raccordement électrique, le ou chaque point de raccordement de deuxième extrémité étant situé à proximité d'une deuxième extrémité (55) du dispositif de raccordement (36), opposée à la première extrémité (53).

3. Système de distribution électrique selon la revendication 1 ou 2, dans lequel, dans ledit dispositif de raccordement (36, 36', 36‴, 36‴ʺ), chaque conducteur électrique est une barre conductrice en un matériau électriquement conducteur, chaque barre conductrice étant associée à une phase électrique ou à un conducteur de neutre.

4. Système de distribution électrique selon la revendication 3, dans lequel chaque conducteur est formé d'une pluralité de sections conductrices électriquement connectées pour former une barre conductrice.

5. Système de distribution électrique selon l'une quelconque des revendications 1 à 4, dans lequel au moins une des sources d'alimentation électrique auxiliaire (14, 18, 20, 20a, 20b) est une source hybride, configurée pour fournir ou consommer un courant électrique, la ou chaque source hybride étant connectée au dispositif de raccordement (36, 36', 36‴, 36""') à un point de raccordement étant électriquement entre le ou chaque deuxième point de raccordement et le ou chaque point de raccordement intermédiaires (70, 74).

6. Système de distribution électrique selon la revendication 5, dans lequel au moins une source hybride est un système de stockage d'électricité sur batterie (18) ou un véhicule électrique (20).

7. Système selon l'une quelconque des revendications 1 à 6, dans lequel au moins une charge consommatrice d'électricité est un véhicule électrique (20).

8. Système de distribution électrique selon l'une quelconque des revendications 1 à 7, dans lequel les sources d'alimentation auxiliaires comprennent un ou plusieurs générateurs photovoltaïques.

9. Système de distribution électrique selon l'une quelconque des revendications 1 à 8, comportant en outre un dispositif de protection contre la foudre (32), connecté au dispositif de raccordement à côté de l'appareil de commutation principal (38), en particulier à l'opposé de la deuxième extrémité (55).

10. Système de distribution électrique selon l'une quelconque des revendications 1 à 9, comportant des éléments détrompeurs, positionnés sur une face visible d'un boîtier comportant le dispositif de raccordement (36), destinés à guider les connexions du réseau de distribution, des sources d'alimentation électrique auxiliaires et charges dans le système de distribution électrique.

11. Système de distribution électrique selon l'une quelconque des revendications précédentes dans lequel le dispositif de raccordement (36) est linéaire.

12. Système de distribution électrique selon l'une quelconque des revendications précédentes 2 à 11 dans lequel le ou chaque appareil de commutation de charge (44, 46, 44', 46') est connecté au dispositif de raccordement (36, 36') à un point de raccordement intermédiaire (70, 74) situé entre ledit point de raccordement de première extrémité et le ou chaque point de raccordement de deuxième extrémité.

13. Installation de distribution électrique, comportant un système de distribution électrique selon l'une quelconque des revendications précédentes.

## Patentansprüche

1. Stromverteilungssystem zum Verteilen von elektrischen Strömen zwischen einem Stromverteilungsnetz und einer Hausverteilungsanlage (1), wobei das Stromverteilungssystem (10) Folgendes umfasst
- eine Anschlussvorrichtung (36), die ausgebildet ist, um in der Anlage (1) elektrischen Strom aus Quellen zu verteilen, umfassend ein Stromverteilungsnetz (12) und mindestens eine Hilfsstromquelle (14, 16, 18, 20, 20a, 20b) zu mindestens einer Strom verbrauchenden Last (21, 22, 22a, 22b, 22c),
- wobei die Anschlussvorrichtung (36, 36', 36‴, 36ʺʺ) mindestens einen linearen Abschnitt umfasst, wobei jeder lineare Abschnitt eine Vielzahl von elektrischen Leitern (35L, 35N) umfasst, die angepasst sind, um den elektrischen Strom entlang eines elektrischen Leitungswegs zu leiten,
- das System (10) ein Hauptschaltgerät (38) umfasst, das zwischen dem Stromverteilungsnetz (12) und einem ersten Anschlusspunkt (58) verbunden ist, wobei das Hauptschaltgerät (38) konfiguriert ist, um zwischen zwei Zuständen zu schalten, die den Fluss von elektrischem Strom von dem Stromverteilungsnetz (12) zu der Anschlussvorrichtung (36, 36', 36‴, 36‴ʺ) jeweils zulassen oder verhindern,
- für die oder jede Hilfsstromquelle (14, 16, 18, 20, 20a, 20b) jeweils ein Hilfsschaltgerät (40, 42, 44, 40', 44', 44a‴, 44b‴, 46', 46a‴, 46b‴, 46c‴), das zwischen der Hilfsstromquelle und einem zweiten Anschlusspunkt (62, 66, 70) verbunden ist, wobei jedes Hilfsschaltgerät konfiguriert ist, um zwischen zwei Zuständen zu schalten, die jeweils den Fluss von elektrischem Strom von der assoziierten Hilfsstromquelle zu der Anschlussvorrichtung (36, 36', 36‴, 36‴ʺ) zulassen oder verhindern,
- das Stromverteilungssystem (10) ferner umfassend mindestens ein Lastschaltgerät (42, 42', 44, 46, 44', 44a‴, 44b‴, 46', 46a‴, 46b‴, 46c‴), das zwischen mindestens einer Last (30, 22, 22a, 22b, 22c) und der Anschlussvorrichtung (36) verbunden ist, wobei das Lastschaltgerät konfiguriert ist, um zwischen zwei Zuständen zu schalten, die jeweils den Fluss von elektrischem Strom von der Anschlussvorrichtung zu mindestens einer stromverbrauchenden Last (22, 22a, 22b, 22c) zulassen oder verhindern,
- wobei das oder jedes Lastschaltgerät (42, 42', 44, 46, 44', 44a‴, 44b‴, 46', 46a‴, 46b‴, 46c‴) an einem Zwischenanschlusspunkt (70, 74), der elektrisch zwischen dem ersten Anschlusspunkt und dem oder jedem zweiten Anschlusspunkt liegt, elektrisch mit der Anschlussvorrichtung (36, 36', 36‴, 36ʺʺ) verbunden ist, wobei das System **dadurch gekennzeichnet ist, dass** die elektrischen Leiter der Anschlussvorrichtung (36) kalibriert sind, um einen Strom mit einer elektrischen Stromstärke mit einer maximalen Stromschwelle zu führen, wobei die maximale Stromschwelle gleich wie das Maximum zwischen dem maximalen elektrischen Strom, der von dem Stromverteilungsnetz (12) bereitgestellt wird, und der Summe der maximalen elektrischen Ströme, die von der oder den mehreren elektrischen Hilfsquellen (14) bereitgestellt werden, ist.

2. Stromverteilungssystem nach Anspruch 1, wobei der erste Anschlusspunkt (58) ein Anschlusspunkt des ersten Endes der Anschlussvorrichtung ist, der sich in der Nähe eines ersten Endes (53) der Anschlussvorrichtung (36, 36', 36‴) befindet, und der zweite Anschlusspunkt (62, 66, 70) ein Anschlusspunkt (62, 66, 70) des zweiten Endes der elektrischen Anschlussvorrichtung ist, wobei sich der oder jeder Anschlusspunkt des zweiten Endes in der Nähe eines zweiten Endes (55) der Anschlussvorrichtung (36) gegenüber dem ersten Ende (53) befindet.

3. Stromverteilungssystem nach Anspruch 1 oder 2, wobei in der Anschlussvorrichtung (36, 36', 36‴, 36‴ʺ) jeder elektrische Leiter eine Stromschiene aus einem elektrisch leitenden Material ist, wobei jede Stromschiene mit einer elektrischen Phase oder einem Neutralleiter assoziiert ist.

4. Stromverteilungssystem nach Anspruch 3, wobei jeder Leiter aus einer Vielzahl von elektrisch verbundenen leitenden Abschnitten besteht, um eine Leiterschiene zu bilden.

5. Stromverteilungssystem nach einem der Ansprüche 1 bis 4, wobei mindestens eine der Hilfsstromquellen (14, 18, 20, 20a, 20b) eine Hybridquelle ist, die konfiguriert ist, um elektrischen Strom bereitzustellen oder aufzunehmen, wobei die oder jede Hybridquelle an einem Anschlusspunkt, der elektrisch zwischen dem oder jedem zweiten Anschlusspunkt und dem oder jedem Zwischenanschlusspunkt (70, 74) liegt, mit der Anschlussvorrichtung (36, 36', 36‴, 36‴ʺ) verbunden ist.

6. Stromverteilungssystem nach Anspruch 5, wobei mindestens eine Hybridquelle ein batteriebetriebenes Stromspeichersystem (18) oder ein Elektrofahrzeug (20) ist.

7. System nach einem der Ansprüche 1 bis 6, wobei mindestens eine stromverbrauchende Last ein Elektrofahrzeug (20) ist.

8. Stromverteilungssystem nach einem der Ansprüche 1 bis 7, wobei die Hilfsstromquellen einen oder mehrere photovoltaische Generatoren umfassen.

9. Stromverteilungssystem nach einem der Ansprüche 1 bis 8, ferner umfassend eine Blitzschutzvorrichtung (32), die neben dem Hauptschaltgerät (38), insbesondere gegenüber dem zweiten Ende (55), mit der Anschlussvorrichtung verbunden ist.

10. Stromverteilungssystem nach einem der Ansprüche 1 bis 9, umfassend Codierungselemente, die auf einer sichtbaren Seite eines Gehäuses, das die Anschlussvorrichtung (36) umfasst, positioniert sind, um die Verbindungen des Verteilungsnetzes, der Hilfsstromquellen und Lasten in dem Stromverteilungssystem zu führen.

11. Stromverteilungssystem nach einem der vorherigen Ansprüche, wobei die Anschlussvorrichtung (36) linear ist.

12. Stromverteilungssystem nach einem der vorherigen Ansprüche 2 bis 11, wobei das oder jedes Lastschaltgerät (44, 46, 44', 46') mit der Anschlussvorrichtung (36, 36') an einem Zwischenanschlusspunkt (70, 74) verbunden ist, der sich zwischen dem Anschlusspunkt des ersten Endes und dem oder jedem Anschlusspunkt des zweiten Endes befindet.

13. Stromverteilungsanlage, umfassend ein Stromverteilungssystem nach einem der vorherigen Ansprüche.

## Claims

1. An electrical distribution system for distributing electrical currents between an electrical distribution network and a domestic distribution installation (1), wherein the electrical distribution system (10) comprises
- a connection device (36) arranged to distribute an electrical current in the installation (1), from sources comprising an electrical distribution network (12) and at least one auxiliary power supply source (14, 16, 18, 20, 20a, 20b), to at least one electricity-consuming load (21, 22, 22a, 22b, 22c),
- the connection device (36, 36', 36", 36ʺʺ) comprises at least one linear section, each linear section comprising a plurality of electrical conductors (35L, 35N) adapted to carry the electrical current along an electrical conduction path,
- the system (10) comprising a main switching apparatus (38), connected between the electrical distribution network (12) and a first connection point (58), the main switching apparatus (38) being configured to switch between two states respectively permitting or preventing the flow of electrical current from the electrical distribution network (12) to the connection device (36, 36', 36‴, 36‴ʺ),
- for the or each auxiliary electrical supply source (14, 16, 18, 20, 20a, 20b), respectively an auxiliary switching device (40, 42, 44, 40', 44', 44a‴, 44b‴, 46', 46a‴, 46b‴, 46c‴), connected between said auxiliary electrical supply source and a second connection point (62, 66, 70), each auxiliary switching device being configured to switch between two states respectively authorising or preventing the flow of electrical current from the associated auxiliary electrical supply source to the connection device (36, 36', 36‴, 36‴ʺ),
- the electrical distribution system (10) further comprising at least one load switching device (42, 42', 44, 46, 44', 44a‴, 44b‴, 46', 46a‴, 46b‴, 46c‴), connected between at least one load (30, 22, 22a, 22b, 22c) and the connection device (36), the load switching device being configured to switch between two states respectively authorising or preventing the flow of electrical current from the connection device to at least one electricity-consuming load (22, 22a, 22b, 22c),
- the or each load switching apparatus (42, 42', 44, 46, 44', 44a‴, 44b‴, 46', 46a‴, 46b‴, 46c‴) being electrically connected to the connection device (36, 36', 36‴, 36ʺʺ) at an intermediate connection point (70, 74) being electrically between said first connection point and the or each second connection point, the system being **characterised in that** the electrical conductors of the connection device (36) are rated to carry a maximum current threshold electrical current, the maximum current threshold being equal to the maximum between the maximum electrical current supplied by the electrical distribution network (12) and the sum of the maximum electrical currents supplied by the or each plurality of auxiliary electrical sources (14).

2. The electrical distribution system of claim 1, wherein the first connection point (58) is a first end connection point of the connection device, located in the vicinity of a first end (53) of the connection device (36, 36', 36‴) and the second connection point (62, 66, 70) is a second end connection point (62, 66, 70) of the electrical connection device, the or each second end connection point being located in the vicinity of a second end (55) of the connection device (36), opposite the first end (53).

3. An electrical distribution system according to claim 1 or 2, wherein, in said connection device (36, 36', 36‴, 36‴ʺ), each electrical conductor is a conductive bar of electrically conductive material, each conductive bar being associated with an electrical phase or a neutral conductor.

4. The electrical distribution system of claim 3, wherein each conductor is formed from a plurality of conductive sections electrically connected to form a conductor bar.

5. An electrical distribution system according to any one of claims 1 to 4, wherein at least one of the auxiliary electrical power sources (14, 18, 20, 20a, 20b) is a hybrid source, configured to supply or consume electrical power, the or each hybrid source being connected to the connection device (36, 36', 36‴, 36‴ʺ) at a connection point being electrically between the or each second connection point and the or each intermediate connection point (70, 74).

6. The electrical distribution system of claim 5, wherein at least one hybrid source is a battery electricity storage system (18) or an electrical vehicle (20).

7. A system according to any one of claims 1 to 6, wherein at least one electricity-consuming load is an electrical vehicle (20).

8. An electrical distribution system according to any one of claims 1 to 7, wherein the auxiliary power sources comprise one or more photovoltaic generators.

9. Electrical distribution system according to any one of claims 1 to 8, further comprising a lightning protection device (32), connected to the connection device next to the main switchgear (38), in particular opposite the second end (55).

10. Electrical distribution system according to any one of claims 1 to 9, comprising coding elements, positioned on a visible face of a housing comprising the connection device (36), intended to guide the connections of the distribution network, auxiliary electrical power sources and loads in the electrical distribution system.

11. An electrical distribution system according to any one of the preceding claims in which the connection device (36) is linear.

12. An electrical distribution system according to any one of the preceding claims 2 to 11 wherein the or each load switching device (44, 46, 44', 46') is connected to the connection device (36, 36') at an intermediate connection point (70, 74) located between said first end connection point and the or each second end connection point.

13. Electrical distribution installation comprising an electrical distribution system according to any one of the preceding claims.
